(19) Europäisches Patentamt / European Patent Office / Office européen des brevets

(11) **EP 3 460 749 B1**

(12) **FASCICULE DE BREVET EUROPEEN**

(45) Date de publication et mention
de la délivrance du brevet:
**22.01.2020 Bulletin 2020/04**

(51) Int Cl.:
***G06T 5/00*** *(2006.01)*

(21) Numéro de dépôt: **18195070.0**

(22) Date de dépôt: **18.09.2018**

(54) **PROCEDE DE DETERMINATION D'UNE FONCTION D'ETALEMENT DE POINT D'UN SYSTEME D'IMAGERIE**

VERFAHREN ZUR BESTIMMUNG DER PUNKTSPREIZFUNKTION EINES BILDAUFNAHMESYSTEMS

METHOD FOR DETERMINING A POINT SPREAD FUNCTION OF AN IMAGING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2017 FR 1758701**

(43) Date de publication de la demande:
**27.03.2019 Bulletin 2019/13**

(73) Titulaire: **Idemia Identity & Security France**
**92400 Courbevoie (FR)**

(72) Inventeurs:
 • **MAALOUF, Aldo**
 **92130 ISSY LES MOULINEAUX (FR)**
 • **MALEK, Mokrane**
 **92130 ISSY LES MOULINEAUX (FR)**

(74) Mandataire: **Cabinet Le Guen Maillet**
**3, impasse de la Vigie**
**CS 71840**
**35418 Saint-Malo Cedex (FR)**

(56) Documents cités:
**WO-A1-2012/101995    US-A1- 2015 254 810**

 • **MOSLEH ALI ET AL: "Camera intrinsic blur kernel estimation: A reliable framework", 2015 IEEE CONFERENCE ON COMPUTER VISION AND PATTERN RECOGNITION (CVPR), IEEE, 7 juin 2015 (2015-06-07), pages 4961-4968, XP032793955, DOI: 10.1109/CVPR.2015.7299130**

**EP 3 460 749 B1**

## Description

L'invention concerne un procédé de détermination d'une fonction d'étalement de point d'un système d'imagerie, un procédé d'amélioration d'image acquise par un système d'imagerie et un dispositif mettant en œuvre au moins un desdits procédés.

## Contexte de l'invention

Une fonction d'étalement du point (« Point Spread Function (PSF) » en terminologie anglo-saxonne), appelée également réponse impulsionnelle optique (RIO), est une fonction mathématique décrivant une réponse d'un système d'imagerie à une source ponctuelle. La PSF modélise comment un point est imagé par un système d'imagerie et reflète des déformations optiques du système d'imagerie. On considère qu'une image d'un objet issue d'un système optique est le fruit d'une convolution entre un signal issu de l'objet (*i.e.* une image issue d'un système d'imagerie parfait sans déformation optique) et la PSF modélisant le système d'imagerie. Lorsque cette fonction est connue, il est possible de déconvoluer (*i.e.* appliquer une convolution inverse) l'image issue du système d'imagerie par la PSF pour obtenir une image améliorée de l'objet.

Il existe diverses méthodes pour caractériser un système d'imagerie. On connaît par exemple la méthode dite des bords obliques (« Slanted Edge » en terminologie anglo-saxonne) comprise dans la norme ISO 12333 :2014, *Photography -- Electronic still picture imaging -- Resolution and spatial frequency responses*. Cette méthode permet de déterminer une fonction de transfert de modulation (« Modulation Transfert Function (MTF) » en terminologie anglo-saxonne) permettant d'évaluer des capacités d'un système d'imagerie à restituer fidèlement un signal. En optique, la MTF est la fonction qui définit un contraste en fonction d'une finesse des détails à restituer, *i.e.* en fonction de fréquences spatiales. La MTF correspond à un module d'une fonction de transfert optique (« Optical Transfer Function (OTF) » en terminologie anglo-saxonne) qui correspond elle-même à une transformée de Fourier de la PSF.

La méthode décrite dans le document US20160080737A1 permet de déterminer une PSF d'un système de lentilles. Cette méthode utilise une mire, sous forme de grille de test, pour déterminer la PSF. Cette grille de test est placée en face du système de lentilles, à une position correspondant à une distance focale dudit système, cette distance focale dépendant de la taille de la grille de test. Cette méthode ne permet donc que de déterminer la PSF correspondant à la position de la grille de test. La PSF obtenue n'est donc pas valide pour toute autre position de la grille de test. Une image d'un objet situé à une autre position que la position pour laquelle a été calculée la PSF ne pourrait pas être corrigée correctement par la PSF. Cette méthode implique de calculer une autre PSF pour cette autre position et d'avoir des moyens pour déterminer la position de l'objet par rapport au système d'imagerie.

Il est souhaitable de pallier ces inconvénients de l'état de la technique. Il est notamment souhaitable de proposer un procédé et un dispositif qui permettent de déterminer une PSF « générique », valide pour plusieurs positions d'un objet par rapport au système d'imagerie. Par ailleurs, ce procédé doit être simple à mettre en œuvre.

## EXPOSE DE L'INVENTION

Selon un premier aspect de l'invention, l'invention concerne un procédé de détermination d'une fonction d'étalement de point d'un système d'imagerie, comprenant : pour chaque position d'une pluralité de positions d'une mire dans un champ optique dudit système d'imagerie : acquérir une image de la mire, dite image réelle ; obtenir une image synthétique de la mire représentant un modèle numérique de la mire recalé sur une zone de l'image réelle correspondant à la mire de manière à ce que ledit modèle coïncide à ladite zone ; estimer la fonction d'étalement de point en utilisant l'image réelle et l'image synthétique ; et, calculer une fonction de transfert optique en appliquant une transformée de Fourier à la fonction d'étalement de point ; calculer une fonction de transfert optique moyenne à partir des fonctions de transfert optique calculées pour chaque position de la pluralité de positions ; et, obtenir une fonction d'étalement de point moyenne en appliquant une transformée de Fourier inverse à la fonction de transfert optique moyenne.

Ainsi, on obtient une fonction d'étalement de point valable pour une pluralité de positions d'un objet qui se situerait dans le champ optique du système d'imagerie. Il n'est alors pas nécessaire d'avoir une fonction d'étalement de point dédiée à chaque position possible d'un objet dans le champ optique du système d'imagerie, ni de déterminer la position dudit objet par rapport au système d'imagerie.

Selon un mode de réalisation, chaque position de la pluralité de positions se situe dans une zone de travail du système d'imagerie dans laquelle des objets devant être imagés par le système d'imagerie doivent se situer pour pouvoir être imagés par le système d'imagerie.

Ainsi, la fonction d'étalement de point est valide pour un objet situé à une position quelconque dans la zone de travail.

Selon un mode de réalisation, l'estimation de la fonction d'étalement de point comprend : calculer une image de contour à partir de l'image réelle, dite image de contour réelle, et une image de contour à partir de l'image synthétique, dite image de contour synthétique, une image de contour étant obtenue à partir d'une image originale et représentant exclusivement des contours d'objets contenus dans l'image originale ; déterminer la fonction d'étalement de point minimisant une fonction de coût comprenant un premier terme correspondant à une différence entre l'image de contour réelle et un produit de convolution entre la fonction d'étalement de point à estimer et l'image de contour synthétique.

Selon un mode de réalisation, la fonction de coût à minimiser s'écrit de la manière suivante :

$$f(h) = \|h * \Delta 0 - \Delta I\|_2^2 + \gamma \|h\|_2^2 + \beta \|h\|_1$$

où $f(h)$ est la fonction de coût à minimiser, $h$ est une matrice représentative de la fonction d'étalement de point recherchée, $\|.\|_2^2$ représente une norme $L^2$ au carré, $\|.\|_1$ représente une norme $L^1$, * est un opérateur de convolution, $\gamma\|h\|_2^2$ est un premier terme de régularisation utilisé pour accélérer la convergence de la minimisation, $\beta\|h\|_1$ est un deuxième terme de régularisation utilisé pour obtenir une fonction d'étalement de point dérivable sur toute une image acquise par le système d'imagerie, $\gamma$ et $\beta$ sont des constantes prédéterminées.

Selon un mode de réalisation, la mire comprend des objets comprenant des bords ayant de forts gradients spatiaux dans une pluralité de directions différentes.

Selon un mode de réalisation, une transformation géométrique permettant de transformer le modèle numérique de la mire pour qu'il coïncide à ladite zone de l'image réelle correspondant à la mire est obtenue pour chaque position de la pluralité de positions.

Selon un mode de réalisation, la transformation géométrique est calculée en utilisant des points particuliers prédéfinis de la mire.

Selon un mode de réalisation, le procédé comprend une segmentation de la zone de l'image réelle correspondant à la mire, l'image réelle utilisée lors du recalage du modèle géométrique de la mire et lors de l'estimation de la fonction d'étalement de point comprenant exclusivement la zone comprenant la mire, chaque zone de l'image réelle ne correspondant pas à la mire ayant été supprimée.

Selon un deuxième aspect de l'invention, l'invention concerne un procédé d'amélioration d'image acquise en utilisant un système d'imagerie, comprenant : obtenir une fonction d'étalement de point du système d'imagerie en appliquant le procédé selon le premier aspect; puis, appliquer une convolution inverse entre la fonction d'étalement de point ainsi obtenue et chaque image acquise en utilisant le système d'imagerie.

Selon un troisième aspect de l'invention, l'invention concerne un dispositif de détermination d'une fonction d'étalement de point d'un système d'imagerie, comprenant : des moyens mis en œuvre pour chaque position d'une pluralité de positions d'une mire dans un champ optique dudit système d'imagerie comprenant : des moyens d'acquisition d'images pour acquérir une image de la mire, dite image réelle ; des moyens d'obtention pour obtenir une image synthétique de la mire représentant un modèle numérique de la mire recalé sur une zone de l'image réelle correspondant à la mire de manière à ce que ledit modèle coïncide à ladite zone ; des moyens d'estimation pour estimer la fonction d'étalement de point en utilisant l'image réelle et l'image synthétique ; et, des moyens de calcul pour calculer une fonction de transfert optique en appliquant une transformée de Fourier à la fonction d'étalement de point ; et, des moyens de calcul pour calculer une fonction de transfert optique moyenne à partir des fonctions de transfert optique calculées pour chaque position de la pluralité de positions ; et, des moyens d'obtention pour obtenir une fonction d'étalement de point moyenne en appliquant une transformée de Fourier inverse à la fonction de transfert optique moyenne.

Selon un quatrième aspect de l'invention, l'invention concerne un programme d'ordinateur comprenant des instructions pour mettre en œuvre, par un dispositif, le procédé selon le premier ou le deuxième aspect, lorsque ledit programme est exécuté par un processeur dudit dispositif.

Selon un quatrième aspect de l'invention, l'invention concerne des moyens de stockage, stockant un programme d'ordinateur comprenant des instructions pour mettre en œuvre, par un dispositif, le procédé selon le premier ou le deuxième aspect, lorsque ledit programme est exécuté par un processeur dudit dispositif.

## BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 décrit schématiquement un système d'imagerie pour lequel on détermine une PSF en utilisant le procédé selon l'invention ;
- la Fig. 2 illustre schématiquement un exemple de mire adaptée au procédé selon l'invention;
- la Fig. 3 illustre schématiquement un exemple d'architecture matérielle d'un module de traitement mettant en œuvre le procédé de détermination d'une PSF selon l'invention ;
- la Fig. 4 illustre schématiquement un exemple de procédé de détermination d'une PSF selon l'invention ; et,
- la Fig. 5 illustre schématiquement un exemple de procédé d'amélioration d'images comprenant le procédé de détermination d'une PSF selon l'invention.

## DESCRIPTION DETAILLEE DE DIVERS MODES DE REALISATION

La description qui suit détaille plus particulièrement un mode de réalisation de la présente invention dans un contexte où le système d'imagerie comprend un système d'acquisition d'images tel qu'une caméra numérique comprenant un objectif comprenant un réseau de lentilles, un système de mise au point (tel qu'un système d'autofocus) et un capteur d'images tel qu'un capteur d'images CCD (dispositif de transfert de charge, « Charged Couple device » en terminologie anglo-saxonne) ou CMOS (semiconducteur metal-oxyde complémentaire, « complementary metal-oxide semiconductor » en terminologie anglo-saxonne). Le procédé est toutefois adapté à d'autres types de systèmes d'imagerie produisant des images pouvant être traitées numériquement, tels que des caméras analogiques, des objectifs, etc.

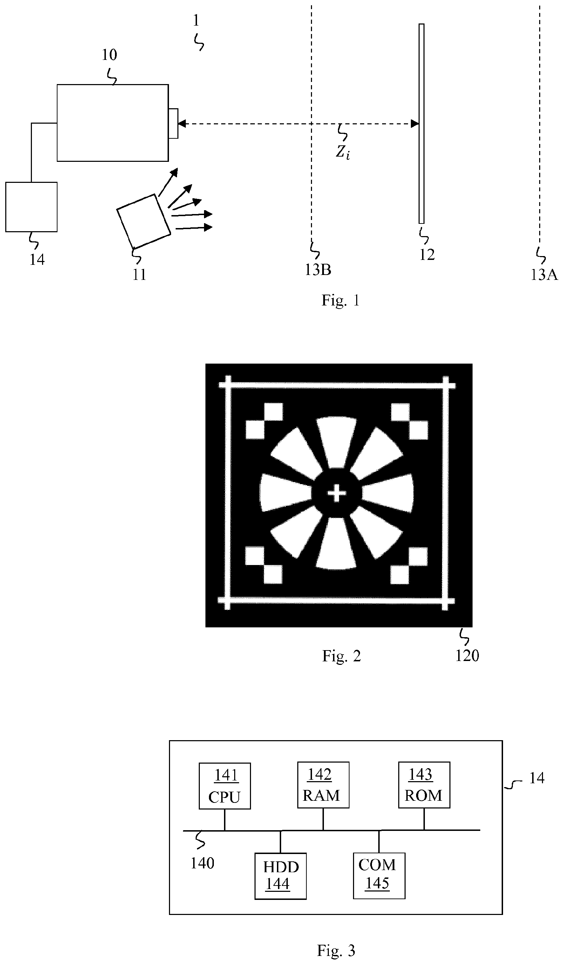

La **Fig. 1** décrit schématiquement un système d'imagerie 1 pour lequel on détermine une PSF en utilisant le procédé selon l'invention.

Le système d'imagerie 1 de la Fig. 1 comprend une caméra numérique 10. Cette caméra 10 est connectée à un dispositif de traitement 14 mettant en œuvre le procédé selon l'invention. Devant la caméra 10 se trouve un objet 12, ici un objet plan, comprenant une mire. Dans un mode de réalisation, l'objet 12 est placé de sorte que le centre de la mire soit sur un axe optique de la caméra 10 à une distance $Z_i$. La distance $Z_i$ est comprise entre une distance minimum 13B et une distance maximum 13A, la zone entre les distances 13B et 13A formant une zone de travail. La zone de travail est définie comme une zone dans laquelle des objets devant être imagés par la caméra 10 doivent se situer pour pouvoir être imagés par la caméra 10. Cette zone de travail pourrait être déterminée par exemple en utilisant un critère permettant de restituer fidèlement certains détails d'un objet. Une mesure d'un degré de flou dans une image pourrait constituer un tel critère.

Le système d'imagerie 1 comprend en outre, un système d'éclairage 11 éclairant l'objet 12.

Dans un mode de réalisation, la caméra 10 comprend un capteur d'images comprenant des pixels de «2,5 μm », un objectif de focale « 25 mm », et une ouverture fixe de «2.8 », le système d'éclairage produit une lumière infrarouge de longueur d'onde « 860 nm ». La zone de travail est comprise entre « 55 cm » et « 95 cm », une distance optimale de mise au point étant de « 75 cm ».

Dans un mode de réalisation, l'objet 12 pourrait être placé de sorte que le centre de la mire soit dans le champ optique de la caméra 10, *i.e.* à un endroit visible par la caméra 10, mais sans être sur l'axe optique de la caméra 10.

La **Fig. 2** illustre schématiquement un exemple de mire 120 adaptée au procédé selon l'invention.

Dans un mode de réalisation, la mire 120 comprend des objets (des formes géométriques) ayant de forts gradients spatiaux dans une pluralité de directions différentes. Dans l'exemple de la Fig. 2, la mire 120 comprend des portions d'un disque tronquées possédant des bords tranchants disposés radialement.

Dans un mode de réalisation, la mire 120 comprend des points particuliers permettant d'estimer une transformation géométrique de la mire due à des déformations optiques du système d'imagerie 1 (imperfection de l'objectif, imperfection du capteur d'images, ...). Dans la mire 120 de la Fig. 2, les points particuliers sont quatre paires de carrés reliés par un de leurs coins.

Dans un mode de réalisation, lorsque le système d'imagerie 1 induit des déformations optiques complexes, il est possible d'utiliser une mire comprenant plus de quatre points particuliers, les points particuliers pouvant être des paires de carrés reliés par un de leurs coins ou toute autre forme géométrique adaptée telle que des disques, des croix, des triangles, etc.

La **Fig. 3** illustre schématiquement un exemple d'architecture matérielle du module de traitement 14.

Selon l'exemple d'architecture matérielle représenté à la Fig. 3, le module de traitement 14 comprend alors, reliés par un bus de communication 140 : un processeur ou CPU (« Central Processing Unit» en anglais) 141 ; une mémoire vive RAM (« Random Access Memory » en anglais) 142 ; une mémoire morte ROM (« Read Only Memory » en anglais) 143 ; une unité de stockage telle qu'un disque dur ou un lecteur de support de stockage, tel qu'un lecteur de cartes SD (« Secure Digital » en anglais) 144 ; au moins une interface de communication 145 permettant au module de traitement 14 de communiquer avec la caméra 10 pour recevoir les images acquises par ladite caméra 10 et de contrôler des acquisitions d'images par la caméra 10.

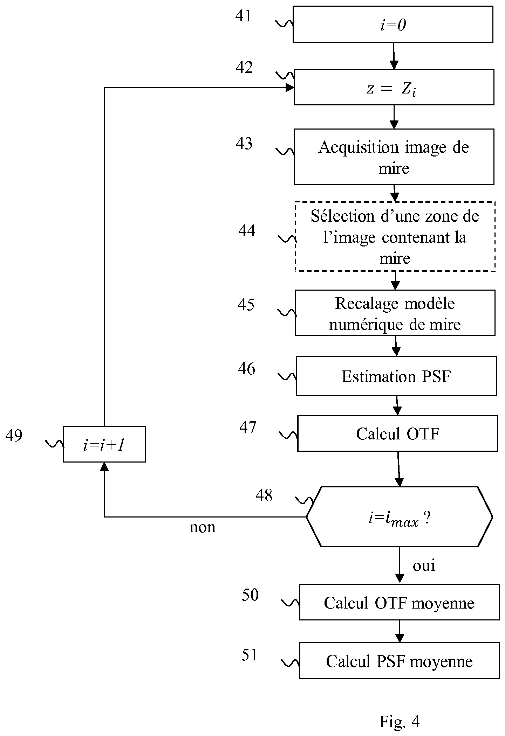

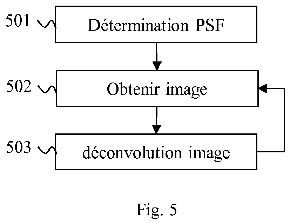

Le processeur 141 est capable d'exécuter des instructions chargées dans la RAM 142 à partir de la ROM 143, d'une mémoire externe (non représentée), d'un support de stockage (tel qu'une carte SD), ou d'un réseau de communication. Lorsque le module d'analyse 14 est mis sous tension, le processeur 141 est capable de lire de la RAM 142 des instructions et de les exécuter. Ces instructions forment un programme d'ordinateur causant la mise en œuvre, par le processeur 141, du procédé décrit en relation avec la Fig. 4 ou la Fig. 5.

Les procédés décrits en relation avec les Figs. 4 ou 5 peuvent être implémentés sous forme logicielle par exécution d'un ensemble d'instructions par une machine programmable, par exemple un DSP (« Digital Signal Processor » en anglais), un microcontrôleur ou un GPU (processeur graphique, « Graphics Processing Unit» en terminologie anglo-saxonne), ou être implémentés sous forme matérielle par une machine ou un composant dédié, par exemple un FPGA (« Field-Programmable Gate Array » en anglais) ou un ASIC (« Application-Specific Integrated Circuit » en anglais).

On note que le module de traitement 14 aurait tout aussi bien pu être compris dans la caméra 10.

La **Fig. 4** illustre schématiquement un exemple de procédé de détermination d'une PSF selon l'invention.

Un objectif du procédé de la Fig. 4 est de déterminer une PSF du système d'imagerie 1 générique dans le sens où cette PSF doit être adaptée à une pluralité de positions d'un objet dans la zone de travail et non à une seule position particulière.

Le procédé de la Fig. 4 débute par une étape 41 au cours de laquelle le module de traitement 14 initialise une variable $i$ à zéro. La variable $i$ est un nombre entier positif utilisé par la suite pour parcourir un ensemble prédéfini de distances $Z_i$ comprises dans la zone de travail. L'ensemble prédéfini comprend un nombre $i_{max}$ de distances $Z_i$.

Dans une étape 42, le module de traitement 14 initialise une variable z, représentant une distance, à une valeur d'une des distances $Z_i$ correspondant à la valeur courante de la variable $i$.

Dans une étape 43, le module de traitement provoque le positionnement de l'objet 12 à la distance z du système d'imagerie 1, c'est-à-dire à une distance z par rapport au bord extérieur de l'objectif de la caméra 10 le plus proche de la mire. Dans un mode de réalisation, l'objet 12 est fixé sur un dispositif coulissant positionné sur un rail horizontal parallèle à l'axe optique de la caméra 10. Le module de traitement 14 contrôle alors le dispositif coulissant pour positionner l'objet 12 à la distance souhaitée de la caméra 10.

Au cours de l'étape 43, le module de traitement 14 provoque une acquisition d'une image, dite image réelle, de l'objet 12 par le système d'imagerie 1.

Dans une étape 45, le module de traitement 14 obtient une image synthétique de la mire 120 représentant un modèle numérique de la mire 120 recalé sur une zone de l'image réelle correspondant à la mire de manière à ce que ledit modèle numérique coïncide (*i.e.* se superpose) à ladite zone de l'image réelle. Le modèle numérique de la mire 120, correspond à une image idéale de la mire 120 sans déformation optique et sans convolution par la PSF du système d'imagerie 1.

Dans un mode de réalisation, l'objet 12 est positionné perpendiculairement à l'axe optique de telle sorte que le centre de la mire soit sur l'axe optique de la caméra 10. Dans ce cas, le recalage du modèle numérique se fait de manière itérative. On suppose que le module de traitement 14 stocke le modèle numérique de la mire 120 dans une taille prédéfinie correspondant à une taille maximum que pourrait avoir la mire 120 dans l'image réelle. Dans une première itération, le module de traitement utilise le modèle numérique de la mire 120 dans la taille prédéfinie et calcule une différence entre le modèle numérique et la mire 120 dans l'image réelle. Dans chaque itération suivante, le module de traitement 14 réduit la taille de la mire et calcule à nouveau la différence entre le modèle numérique et la mire 120 dans l'image réelle. Les itérations s'arrêtent lorsque le module de traitement 14 a trouvé une différence minimum. Le modèle numérique de la mire 120 dans la taille minimisant la différence est alors considéré comme recalé sur le mire 120 de l'image réelle. Le module de traitement 120 génère alors l'image synthétique à partir du modèle numérique de la mire 120 ainsi recalé.

Dans un mode de réalisation, le module de traitement 14 détermine une transformation géométrique permettant de passer du modèle numérique de la mire 120 dans la taille prédéfinie, à la mire 120 telle qu'elle apparaît dans l'image réelle. Cette détermination est basée sur une détection des points particuliers dans l'image réelle et une détermination de la transformation géométrique permettant de projeter les points particuliers du modèle numérique sur les points particuliers de l'image réelle. La transformation est ensuite appliquée au modèle numérique de la mire 120 pour obtenir l'image synthétique. La détermination de la transformation géométrique peut utiliser par exemple une méthode décrite dans les publications Goshtasby, Ardeshir, "Piecewise linear mapping functions for image registration, " Pattern Recognition, Vol. 19, 1986, pp. 459-466 et Goshtasby, Ardeshir, "Image registration by local approximation methods," Image and Vision Computing, Vol. 6, 1988, pp. 255-261.

Dans une mise en œuvre particulière, l'image réelle est affichée sur un dispositif d'affichage d'un utilisateur et l'utilisateur détoure une position de chaque point particulier. La position de chaque point particulier ainsi détourée est ensuite fournie au module de traitement 14 afin qu'il mette en œuvre une procédure d'estimation de la transformation géométrique.

Dans un mode de réalisation, le module de traitement 14 obtient pour chaque distance $Z_i$, une transformation géométrique prédéterminée. Chaque transformation géométrique a été déterminée en plaçant un objet à la distance $Z_i$ du système d'imagerie 1, en acquérant une image dudit objet, puis en déterminant la transformation géométrique permettant de passer d'une image de référence dudit objet à l'image acquise par le système d'imagerie 1.

Dans une étape 46, le module de traitement 14 estime la PSF du système d'imagerie 1 en utilisant l'image réelle et l'image synthétique.

Dans un mode de réalisation, le module de traitement 14 calcule une image de contour, dite image de contour réelle, à partir de l'image réelle $\Delta I$ et une image de contour, dite image de contour synthétique, à partir de l'image synthétique $\Delta O$. Une image de contour est obtenue à partir d'une image originale et représente exclusivement des contours d'objets contenus dans l'image originale. On peut obtenir une image de contour par diverses méthodes telles que par exemple, un filtrage de Canny ou un filtrage de Sobel. Dans une mise en œuvre particulière, chaque image de contour est obtenue en appliquant un opérateur gradient à chaque image originale respective (*i.e.* l'image réelle et l'image synthétique). Le module de traitement 14 détermine ensuite la PSF minimisant une fonction de coût $f(h)$ comprenant un premier terme correspondant à une différence entre l'image de contour réelle $\Delta I$ et un produit de convolution entre la PSF du système d'imagerie 1 à estimer et l'image de contour synthétique $\Delta 0$.

La fonction de coût $f(h)$ peut s'écrire de la manière suivante :

$$f(h) = \|h * \Delta 0 - \Delta I\|_2^2 + \gamma\|h\|_2^2 + \beta\|h\|_1$$

où $h$ est une matrice représentative de la PSF recherchée, $\|.\|_2^2$ représente une norme $L^2$ au carré, $\|.\|_1$ représente une norme $L^1$, $*$ est un opérateur de convolution. Le terme $\gamma\|h\|_2^2$ est un premier terme de régularisation que le module de traitement 14 utilise optionnellement pour accélérer la convergence de la minimisation. Le terme $\beta\|h\|_1$ est un deuxième terme de régularisation que le module de traitement 14 utilise optionnellement pour obtenir une PSF dérivable sur toute l'image, c'est-à-dire, ayant une forme lissée. $\gamma$ et $\beta$ sont des constantes prédéterminées. Dans un mode de réalisation, la constante $\gamma$ est déterminée en effectuant plusieurs minimisations sur une base d'images en faisant varier la constante $\gamma$ à chaque image de la base. A la fin de chaque minimisation, une information représentative d'un niveau de netteté de l'image obtenue par déconvolution par la PSF est calculée et on garde la constante $\gamma$ permettant d'obtenir le meilleur niveau de netteté. La constante $\beta$ est obtenue de manière similaire.

Il existe diverses méthodes de minimisation connues applicables à la minimisation de la fonction de coût $f(h)$.

Dans un mode de réalisation, la fonction de coût $f(h)$ est minimisée par une méthode de gradient conjugué ou par une méthode des multiplicateurs de Lagrange. La PSF minimisant la fonction de coût $f(h)$ est notée $h_i$.

Dans une étape 47, le module de traitement 14 calcule l'OTF de la PSF $h_i$, notée $H_i$, en appliquant une transformée de Fourier à la PSF $h_i$.

Dans une étape 48, le module de traitement 14 détermine si la variable $i$ est égale au nombre de distances dans l'ensemble prédéfini de distances $Z_i$. Si ce n'est pas le cas, la variable $i$ est incrémentée d'une unité par le module de traitement 14 lors d'une étape 49 et le module de traitement 14 retourne à l'étape 42.

Si la variable $i$ a atteint le nombre de distances dans l'ensemble prédéfini de distances $Z_i$, le module de traitement 14 passe à une étape 50, au cours de laquelle le module de traitement 14 calcule une OTF moyenne, notée $H_{moy}$, à partir des OTF $H_i$ calculées pour chaque distance $Z_i$. Dans un mode de réalisation :

$$H_{moy} = \frac{\sum_{i=0}^{i<i_{max}} H_i}{i_{max}}$$

Les OTF $H_i$ étant représentées sous forme de matrices, la moyenne est une moyenne matricielle, c'est-à-dire que chaque coefficient d'une matrice $H_i$ est moyenné avec les coefficients situés à la même position dans les autres matrices $H_i$.

Dans une étape 51, le module de traitement obtient une PSF moyenne $h_{moy}$ en appliquant une transformée de Fourier inverse à l'OTF moyenne $H_{moy}$ : La PSF moyenne $h_{moy}$ est alors considérée comme la PSF du système d'imagerie 1. Cette PSF est valide quelle que soit la distance d'un objet par rapport au système d'imagerie 1 comprise dans la zone de travail. Cette PSF peut donc être validement utilisée pour améliorer une image acquise par le système d'imagerie 1 d'un objet situé à une position quelconque dans la zone de travail.

On note que le passage par une OTF moyenne pour calculer la PSF moyenne, plutôt qu'un calcul direct de la PSF moyenne en faisant une moyenne des PSF $h_i$, permet une meilleure conservation des informations contenues dans chaque PSF $h_i$ pour le calcul de la PSF $h_{moy}$.

Dans un mode de réalisation, le procédé de la Fig. 4 comprend une étape 44 située entre l'étape 43 et l'étape 45 au cours de laquelle, le module de traitement 14 effectue une détection dans l'image réelle d'une zone comprenant la mire 120. Cette étape revient à segmenter l'image réelle de manière à en extraire la zone comprenant la mire 120. Dans une mise en œuvre, l'image réelle est affichée sur un dispositif d'affichage tel qu'un ordinateur d'un utilisateur et l'utilisateur détoure la mire 120 dans l'image réelle à l'aide d'un dispositif de pointage tel qu'une souris. Dans une autre mise en œuvre, une méthode de segmentation automatique basée contour actif est utilisée pour segmenter la mire 120 dans l'image réelle. L'image réelle utilisée lors des étapes 45 et 46 est alors une image comprenant exclusivement la zone comprenant la mire 120, toutes les zones de l'image réelle ne correspondant pas à la mire ayant été supprimées. Ainsi, le recalage du modèle numérique de la mire 120 et l'estimation de la PSF du système d'imagerie 1 ne sont pas perturbés par des zones de l'image réelle ne correspondant pas à la mire 120.

La **Fig.5** illustre schématiquement un exemple de procédé d'amélioration d'images comprenant le procédé selon l'invention.

Le procédé de la Fig. 5 est mis en œuvre par le module de traitement 14 à chaque acquisition d'une image d'un objet par le système d'imagerie 1.

Dans une étape 501, qu'on pourrait qualifier d'étape de configuration, préalablement à l'acquisition d'une image d'un objet par le système d'imagerie 1, le module de traitement 14 exécute le procédé décrit en relation avec la Fig. 4. Lors de cette exécution, le module de traitement 14 obtient la PSF du système d'imagerie 1.

Dans une étape 502, le module de traitement 14 obtient une image d'un objet acquise par le système d'imagerie 1.

Dans une étape 503, le module de traitement 14 applique une convolution inverse (*i.e.* une déconvolution) à l'image de l'objet reçue par la PSF obtenue lors de l'étape 501 pour obtenir une image de l'objet améliorée. Dans un mode de réalisation, le module de traitement 14 applique une déconvolution de Wiener à l'image de l'objet.

Suite à l'étape 503, le module de traitement se met en attente d'une nouvelle image d'un objet acquise par le système d'imagerie 1 et retourne à l'étape 502 dès qu'il obtient une nouvelle image.

**Revendications**

1. Procédé de détermination d'une fonction d'étalement de point d'un système d'imagerie (1), **caractérisé en ce qu'**il comprend :

   pour chaque position d'une pluralité de positions d'une mire (120) dans un champ optique dudit système d'imagerie :

       acquérir (43) une image de la mire, dite image réelle ;
       obtenir (45) une image synthétique de la mire représentant un modèle numérique de la mire recalé sur une zone de l'image réelle correspondant à la mire de manière à ce que ledit modèle coïncide à ladite zone ;
       estimer (46) la fonction d'étalement de point en utilisant l'image réelle et l'image synthétique ; et,
       calculer (47) une fonction de transfert optique en appliquant une transformée de Fourier à la fonction d'étalement de point ;
       calculer (50) une fonction de transfert optique moyenne à partir des fonctions de transfert optique calculées pour chaque position de la pluralité de positions ; et,
       obtenir (51) une fonction d'étalement de point moyenne en appliquant une transformée de Fourier inverse à la fonction de transfert optique moyenne.

2. Procédé selon la revendication 1, **caractérisé en ce que** chaque position de la pluralité de positions se situe dans une zone de travail du système d'imagerie dans laquelle des objets devant être imagés par le système d'imagerie doivent se situer pour pouvoir être imagés par le système d'imagerie.

3. Procédé selon la revendication 1 ou 2, **caractérisé en ce que** l'estimation de la fonction d'étalement de point comprend :

       calculer une image de contour à partir de l'image réelle, dite image de contour réelle, et une image de contour à partir de l'image synthétique, dite image de contour synthétique, une image de contour étant obtenue à partir d'une image originale et représentant exclusivement des contours d'objets contenus dans l'image originale ;
       déterminer la fonction d'étalement de point minimisant une fonction de coût comprenant un premier terme correspondant à une différence entre l'image de contour réelle et un produit de convolution entre la fonction d'étalement de point à estimer et l'image de contour synthétique.

4. Procédé selon la revendication 3, **caractérisé en ce que** la fonction de coût à minimiser s'écrit de la manière suivante :

$$f(h) = \|h * \Delta 0 - \Delta I\|_2^2 + \gamma \|h\|_2^2 + \beta \|h\|_1$$

où $f(h)$ est la fonction de coût à minimiser, $h$ est une matrice représentative de la fonction d'étalement de point recherchée, $\|.\|_2^2$ représente une norme $L^2$ au carré, $\|.\|_1$ représente une norme $L^1$, $*$ est un opérateur de convolution, $\gamma \|h\|_2^2$ est un premier terme de régularisation utilisé pour accélérer la convergence de la minimisation, $\beta \|h\|_1$ est un deuxième terme de régularisation utilisé pour obtenir une fonction d'étalement de point dérivable sur toute une image acquise par le système d'imagerie, $\gamma$ et $\beta$ sont des constantes prédéterminées.

5. Procédé selon l'une quelconque des revendications précédentes, **caractérisé en ce que** la mire comprend des objets comprenant des bords ayant de forts gradients spatiaux dans une pluralité de directions différentes.

6. Procédé selon l'une quelconque des revendications précédentes, **caractérisé en ce qu'**une transformation géométrique permettant de transformer le modèle numérique de la mire pour qu'il coïncide à ladite zone de l'image réelle correspondant à la mire est obtenue pour chaque position de la pluralité de positions.

7. Procédé selon la revendication 6, **caractérisé en ce que** la transformation géométrique est calculée en utilisant des points particuliers prédéfinis de la mire.

8. Procédé selon l'une quelconque des revendications précédentes, **caractérisé en ce que** le procédé comprend une segmentation (44) de la zone de l'image réelle correspondant à la mire, l'image réelle utilisée lors du recalage (45) du modèle géométrique de la mire et lors de l'estimation (46) de la fonction d'étalement de point comprenant exclusivement la zone comprenant la mire, chaque zone de l'image réelle ne correspondant pas à la mire ayant été supprimée.

9. Procédé d'amélioration d'image acquise en utilisant un système d'imagerie, **caractérisé en ce qu'**il comprend :

    obtenir (51) une fonction d'étalement de point du système d'imagerie en appliquant le procédé selon l'une quelconque des revendications 1 à 8 ; puis,

    appliquer (53) une convolution inverse entre la fonction d'étalement de point ainsi obtenue et chaque image acquise en utilisant le système d'imagerie.

**10.** Dispositif de détermination d'une fonction d'étalement de point d'un système d'imagerie (1), **caractérisé en ce qu'**il comprend :
des moyens mis en œuvre pour chaque position d'une pluralité de positions d'une mire (120) dans un champ optique dudit système d'imagerie comprenant :

    des moyens d'acquisition d'images (10) pour acquérir une image de la mire, dite image réelle ;
    des moyens d'obtention (45) pour obtenir une image synthétique de la mire représentant un modèle numérique de la mire recalé sur une zone de l'image réelle correspondant à la mire de manière à ce que ledit modèle coïncide à ladite zone ;
    des moyens d'estimation (46) pour estimer la fonction d'étalement de point en utilisant l'image réelle et l'image synthétique ; et,
    des moyens de calcul (47) pour calculer une fonction de transfert optique en appliquant une transformée de Fourier à la fonction d'étalement de point ; et,
    des moyens de calcul (50) pour calculer une fonction de transfert optique moyenne à partir des fonctions de transfert optique calculées pour chaque position de la pluralité de positions ; et,
    des moyens d'obtention (51) pour obtenir une fonction d'étalement de point moyenne en appliquant une transformée de Fourier inverse à la fonction de transfert optique moyenne.

**11.** Programme d'ordinateur, **caractérisé en ce qu'**il comprend des instructions pour mettre en œuvre, par un dispositif (14), le procédé selon l'une quelconque des revendications 1 à 9, lorsque ledit programme est exécuté par un processeur (141) dudit dispositif.

**12.** Moyens de stockage, **caractérisés en ce qu'**ils stockent un programme d'ordinateur comprenant des instructions pour mettre en œuvre, par un dispositif (14), le procédé selon l'une quelconque des revendications 1 à 9, lorsque ledit programme est exécuté par un processeur (141) dudit dispositif.

**Patentansprüche**

**1.** Verfahren zur Bestimmung einer Punktspreizfunktion eines Bildverarbeitungssystems (1), **dadurch gekennzeichnet, dass** es Folgendes umfasst:
für jede Position einer Vielzahl von Positionen eines Testmusters (120) in einem Sichtfeld des Bildverarbeitungssystems:

    Erfassen (43) eines Bilds des Testmusters, bezeichnet als reelles Bild;
    Erhalten (45) eines synthetischen Bilds des Testmusters, das ein digitales Modell des Testmusters darstellt, das in einem Bereich des reellen Bilds registriert ist, der dem Testmuster entspricht, so dass das Modell mit dem Bereich übereinstimmt;
    Schätzen (46) der Punktspreizfunktion unter Verwendung des reellen Bilds und des synthetischen Bilds und
    Berechnen (47) einer optischen Übertragungsfunktion unter Anwendung einer Fourier-Transformation auf die Punktspreizfunktion;
    Berechnen (50) einer durchschnittlichen optischen Übertragungsfunktion auf Basis der optischen Übertragungsfunktionen, die für jede Position der Vielzahl von Positionen berechnet wurden; und
    Erhalten (51) einer durchschnittlichen Punktspreizfunktion unter Anwendung einer inversen Fourier-Transformation auf die durchschnittliche optische Übertragungsfunktion.

**2.** Verfahren nach Anspruch 1, **dadurch gekennzeichnet, dass** jede Position der Vielzahl von Positionen sich in einem Arbeitsbereich des Bildverarbeitungssystems befindet, in dem Objekte, die von dem Bildverarbeitungssystem abgebildet werden sollen, sich befinden müssen, um von dem Bildverarbeitungssystem abgebildet werden zu können.

**3.** Verfahren nach Anspruch 1 oder 2, **dadurch gekennzeichnet, dass** die Schätzung der Punktspreizfunktion Folgendes umfasst:

    Berechnen eines Konturenbilds auf Basis des reellen Bilds, bezeichnet als reelles Konturenbild, und eines Konturenbilds auf Basis des synthetischen Bilds, bezeichnet als synthetisches Konturenbild, wobei ein Konturenbild auf Basis eines Originalbilds erhalten wird und ausschließlich Konturen von Objekten darstellt, die im Originalbild enthalten sind;
    Bestimmen der Punktspreizfunktion, die eine Kostenfunktion minimiert, die einen ersten Term umfasst, der einer Differenz zwischen dem reellen Konturenbild und einem Faltungsprodukt zwischen der zu schätzenden Punktspreizfunktion und dem synthetischen Konturenbild entspricht.

4. Verfahren nach Anspruch 3, **dadurch gekennzeichnet, dass** die zu minimierende Kostenfunktion wie folgt geschrieben wird:

$$f(h) = \|h * \Delta 0 - \Delta I\|_2^2 + \gamma \|h\|_2^2 + \beta \|h\|_1$$

wobei *f(h)* die zu minimierende Kostenfunktion ist, *h* eine die gesuchte Punktspreizfunktion darstellende Matrix ist, $\| \cdot \|_2^2$ eine Norm *L²* zum Quadrat darstellt, $\|\cdot\|_1$ eine Norm *L¹* darstellt, * ein Faltungsoperator ist, $\gamma\|h\|_2^2$ ein erster Regularisierungsterm ist, der zur Beschleunigung der Konvergenz der Minimierung verwendet wird, $\beta\|h\|_1$ ein zweiter Regularisierungsterm ist, der zum Erhalten einer Punktspreizfunktion verwendet wird, die in einem gesamten Bild, das von dem Bildverarbeitungssystem erfasst wird, ableitbar ist, *γ* und *β* vorgegebene Konstanten sind.

5. Verfahren nach einem der vorhergehenden Ansprüche, **dadurch gekennzeichnet, dass** das Testmuster Objekte umfasst, die Kanten umfasst, die in einer Vielzahl von unterschiedlichen Richtungen starke räumliche Gradienten aufweisen.

6. Verfahren nach einem der vorhergehenden Ansprüche, **dadurch gekennzeichnet, dass** für jede Position der Vielzahl von Positionen eine geometrische Transformation erhalten wird, die es ermöglicht, das digitale Modell des Testmusters zu transformieren, damit es mit dem Bereich des reellen Bilds übereinstimmt, der dem Testmuster entspricht.

7. Verfahren nach Anspruch 6, **dadurch gekennzeichnet, dass** die geometrische Transformation unter Verwendung von speziellen vordefinierten Punkten des Testmusters berechnet wird.

8. Verfahren nach einem der vorhergehenden Ansprüche, **dadurch gekennzeichnet, dass** das Verfahren eine Segmentierung (44) des Bereichs des reellen Bilds umfasst, der dem Testmuster entspricht, wobei das reelle Bild, das bei der Registrierung (45) des geometrischen Modells des Testmusters und bei der Schätzung (46) der Punktspreizfunktion verwendet wird, ausschließlich den Bereich umfasst, der das Testmuster umfasst, wobei jeder Bereich des reellen Bilds, der nicht dem Testmuster entspricht, gelöscht wurde.

9. Verfahren zur Verbesserung des erfassten Bilds unter Verwendung eines Bildverarbeitungssystems, **dadurch gekennzeichnet, dass** es Folgendes umfasst:

Erhalten (51) einer Punktspreizfunktion von dem Bildverarbeitungssystem unter Anwendung des Verfahrens nach einem der Ansprüche 1 bis 8; dann
Anwenden (53) einer inversen Faltung zwischen der so erhaltenen Punktspreizfunktion und jedem erfassten Bild unter Verwendung des Bildverarbeitungssystems.

10. Vorrichtung zur Bestimmung einer Punktspreizfunktion eines Bildverarbeitungssystems (1), **dadurch gekennzeichnet, dass** sie Folgendes umfasst:
Mittel, die für jede Position einer Vielzahl von Positionen eines Testmusters (120) in einem Sichtfeld des Bildverarbeitungssystems eingesetzt werden, umfassend:

Mittel (10) zur Bilderfassung zum Erfassen eines Bilds des Testmusters, bezeichnet als reelles Bild;
Mittel zum Erhalten (45) zum Erhalten eines synthetischen Bilds des Testmusters, das ein digitales Modell des Testmusters darstellt, das in einem Bereich des reellen Bilds registriert ist, der dem Testmuster entspricht, so dass das Modell mit dem Bereich übereinstimmt;
Mittel zum Schätzen (46) zum Schätzen der Punktspreizfunktion unter Verwendung des reellen Bilds und des synthetischen Bilds und
Mittel zum Berechnen (47) zum Berechnen einer optischen Übertragungsfunktion unter Anwendung einer Fourier-Transformation auf die Punktspreizfunktion und
Mittel zum Berechnen (50) zum Berechnen einer durchschnittlichen optischen Übertragungsfunktion auf Basis der optischen Übertragungsfunktionen, die für jede Position der Vielzahl von Positionen berechnet wurden; und
Mittel zum Erhalten (51) zum Erhalten einer durchschnittlichen Punktspreizfunktion unter Anwendung einer inversen Fourier-Transformation auf die durchschnittliche optische Übertragungsfunktion.

11. Computerprogramm, **dadurch gekennzeichnet, dass** es Anweisungen umfasst zum Durchführen, mittels einer Vorrichtung (14), des Verfahrens nach einem der Ansprüche 1 bis 9, wenn das Programm von einem Prozessor (141) der Vorrichtung ausgeführt wird.

12. Speichermittel, **dadurch gekennzeichnet, dass** sie ein Computerprogramm speichern, das Anweisungen umfasst zum Durchführen, mittels einer Vorrichtung (14), des Verfahrens nach einem der Ansprüche 1 bis 9, wenn das Programm von einem Prozessor (141) der Vorrichtung ausgeführt wird.

## Claims

1. Method for determining a point spread function of an imaging system (1), **characterised in that** it comprises:

   for each position in a plurality of positions of a target (120) in an optical field of said imaging system:

   acquiring (43) an image of the target, referred to as the real image;
   obtaining (45) a synthetic image of the target representing a digital model of the target adjusted to a zone of the real image corresponding to the target so that said model coincides with said zone;
   estimating (46) the point spread function using the real image and the synthetic image; and
   calculating (47) an optical transfer function by applying a Fourier transform to the point spread function;
   calculating (50) an average optical transfer function from the optical transfer functions calculated for each position in the plurality of positions; and
   obtaining (51) an average point spread function by applying an inverse Fourier transform to the average optical transfer function.

2. Method according to claim 1, **characterised in that** each position in the plurality of positions is situated in a working zone of the imaging system in which objects having to be imaged by the imaging system must be situated in order to be able to be imaged by the imaging system.

3. Method according to claim 1 or claim 2, **characterised in that** the estimation of the point spread function comprises:

   calculating a contour image from the real image, referred to as the real contour image, and a contour image from the synthetic image, referred to as the synthetic contour image, a contour image being obtained from an original image and representing solely contours of objects contained in the original image;
   determining the point spread function minimising a cost function comprising a first term corresponding to a difference between the real contour image and a convolution product between the point spread function to be estimated and the synthetic contour image.

4. Method according to claim 3, **characterised in that** the cost function to be minimised is written as follows:

$$f(h) = \|h * \Delta 0 - \Delta I\|_2^2 + \gamma\|h\|_2^2 + \beta\|h\|_1$$

where $f(h)$ is the cost function to be minimised, $h$ is a matrix representing the point spread function sought, $\|.\|_2^2$ represents a squared norm $L^2$, $\|.\|_1$ represents a norm $L^1$, * is a convolution operator, $\gamma\|h\|_2^2$ is a first regularisation term used for accelerating the convergence of the minimisation, $\beta\|h\|_1$ is a second regularisation term used for obtaining a point spread function derivable over an entire image acquired by the imaging system, and $\gamma$ and $\beta$ are predetermined constants.

5. Method according to any of the preceding claims, **characterised in that** the target comprises objects comprising edges having high spatial gradients in a plurality of different directions.

6. Method according to any of the preceding claims, **characterised in that** a geometric transformation for transforming the digital model of the target so that it coincides with said real image zone corresponding to the target is obtained for each position in the plurality of positions.

7. Method according to claim 6, **characterised in that** the geometric transformation is calculated using predefined particular points on the target.

8. Method according to any of the preceding claims, **characterised in that** the method comprises a segmentation (44) of the zone of the real image corresponding to the target, the real image used during the adjustment (45) of the geometric model of the target and during the estimation (46) of the point spread function comprising solely the zone comprising the target, each zone of the real image not corresponding to the target having been eliminated.

9. Method for improving an image acquired using an imaging system, **characterised in that** it comprises:

   obtaining (51) a point spread function of the imaging system by applying the method according to any of claims 1 to 8; then
   applying (53) a reverse convolution between the point spread function thus obtained and each image acquired using the imaging system.

10. Device for determining a point spread function of an imaging system (1), **characterised in that** it comprises:
    means used for each position in a plurality of positions of a target (120) in an optical field of said imaging system, comprising:

image acquisition means (10) for acquiring an image of the target, referred to as the real image; obtaining means (45) for obtaining a synthetic image of the target representing a digital model of the target adjusted to a zone of the real image corresponding to the target so that said model coincides with said zone; estimation means (46) for estimating the point spread function using the real image and the synthetic image; and calculation means (47) for calculating an optical transfer function by applying a Fourier transform to the point spread function; and calculation means (50) for calculating an average optical transfer function from the optical transfer functions calculated for each position in the plurality of positions; and obtaining means (51) for obtaining an average point spread function by applying an inverse Fourier transform to the average optical transfer function.

11. Computer program comprising instructions for the implementation, by a device (14), of the method according to any of claims 1 to 9, when said program is executed by a processor (141) of said device.

12. Storage means, **characterised in that** they store a computer program comprising instructions for the implementation, by a device (14), of the method according to any of claims 1 to 9, when said program is executed by a processor (141) of said device.

Fig. 1

Fig. 2

Fig. 3

41 — $i=0$

42 — $z = Z_i$

43 — Acquisition image de mire

44 — Sélection d'une zone de l'image contenant la mire

45 — Recalage modèle numérique de mire

46 — Estimation PSF

47 — Calcul OTF

49 — $i=i+1$

48 — $i=i_{max}$ ?

non

oui

50 — Calcul OTF moyenne

51 — Calcul PSF moyenne

Fig. 4

501 — Détermination PSF

502 — Obtenir image

503 — déconvolution image

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 20160080737 A1

**Littérature non-brevet citée dans la description**

• **GOSHTASBY ; ARDESHIR.** Piecewise linear mapping functions for image registration. *Pattern Recognition,* 1986, vol. 19, 459-466

• **GOSHTASBY ; ARDESHIR.** Image registration by local approximation methods. *Image and Vision Computing,* 1988, vol. 6, 255-261